# EUROPEAN PATENT SPECIFICATION

(11) **EP 0 570 964 B1**
(45) Date of publication and mention of the grant of the patent: **23.12.1998**
(21) Application number: 93108216.8
(22) Date of filing: 19.05.1993
(51) Int. Cl.: G11B 15/087

(54) **Identification data of a video signal**
Identifikationsdaten eines Videosignals
Données d'identification d'un signal vidéo

(30) Priority: 20.05.1992 JP 154400/92
(43) Date of publication of application: 24.11.1993
(73) Proprietor: SONY CORPORATION, Tokyo (JP)
(72) Inventor: Inoue, Hajime, Shinagawa-ku, Tokyo (JP)
(74) Representative: Melzer, Wolfgang, Dipl.-Ing.

(56) References cited:
- EP-A- 0 154 485
- EP-A- 0 341 319
- EP-A- 0 407 046
- EP-A- 0 465 110
- DE-A- 4 117 059
- GB-A- 2 149 192
- US-A- 4 825 307
- US-A- 5 113 295
- PATENT ABSTRACTS OF JAPAN vol. 9, no. 144 (P-365) 19 June 1985 & JP-A-60 022 752 (MATSUSHITA DENKI SANGYO K.K.) 5 February 1985
- PATENT ABSTRACTS OF JAPAN vol. 9, no. 106 (E-313) 10 May 1985 & JP-A-59 229 978 (MITSUBISHI DENKI K.K.) 24 December 1984
- PATENT ABSTRACTS OF JAPAN vol. 8, no. 175 (P-294) 11 August 1984 & JP-A-59 068 881 (SONY KK) 18 April 1984
- PATENT ABSTRACTS OF JAPAN vol. 16, no. 105 (P-1325) 16 March 1992 & JP-A-03 280 236 (AIWA CO LTD) 11 December 1991

## Description

### FIELD OF THE INVENTION

This invention relates to a video tape recorder, and more particularly to a video tape recorder in which a video signal is converted into a digital signal to be recorded and reproduced.

### BACKGROUND OF THE INVENTION

Some conventional video tape recorders are adapted to convert video signal into digital signal (hereinafter referred to as digital video signal) to be recorded and reproduced.

Since, deterioration in picture quality may be previously prevented in digital video signal even if signal processing is repeated, deterioration in picture quality in the reproduced picture may be previously prevented no matter how many times dubbing is repeated in a manner combined with error correction processing or the like.

On the other hand, when recording digital video signal, the amount of data is increased comparing to the case where the video signal is recorded in the format of an analog signal.

For this reason, in this type of video tape recorder, technique of segment-recording is used to record the digital video signal.

Here, segment-recording refers to a recording method in which digital video signal corresponding to one field is recorded in a manner being allocated to a plurality of recording tracks and which is used to previously prevent an increase in the amount of data per one track.

For such segment-recording, in this type of video tape recorder, a rotary drum is constructed so that a plurality of magnetic heads scan the recording tracks substantially simultaneously whereby digital video signal corresponding to one field is recorded in a cycle consisting of one half rotation or one full rotation of the rotary drum.

If the digital video signal corresponding to one field is recorded in a cycle of one half rotation or one full rotation of the rotary drum, the operation mode, even in the case of segment-recording, may be switched from reproduction mode to recording mode in synchronization with the rotation of the rotary drum to smoothly perform consecutive taking in picture recording.

In the case of this method, however, the number of magnetic heads to be mounted on the rotary drum is increased and there is a disadvantage that the construction of the rotary drum becomes accordingly complicated.

As one method for solving this problem, the method may be considered in which the rotating speed of the rotary drum is increased and thereby the same single magnetic head is used to form recording tracks repeatedly during the time period of one field.

In the case of this method, however, if the operation mode is to be switched in the conventional manner in synchronization with the rotation of the rotary drum, there may be a case in which the operation mode is switched in the course of a segment and, if so, smooth continuation in picture recording becomes difficult to be achieved.

Furthermore, in the case of performing segment-recording in this manner, if it is attempted to record both a video signal of the normal television standards and a video signal of the high definition television standards, the number of recording tracks for segment-recording must be changed between the video signal of the normal television standards and the video signal of the high definition television standards.

In this case, also, it is difficult to achieve smooth continuation in picture recording between the video signal for the normal television standards and the video signal for the high definition television standards if the operation mode is to be switched in synchronization with the rotation of the rotary drum.

From EP-A-407 046 a method and an apparatus for reproducing a digital video signal is known, wherein the video data is recorded in successive block units with each block unit being comprised of several segments recorded in plural tracks and with each segment including unit identifying data, wherein the video data is recovered by scanning the tracks with plural sets of reproducing heads to reproduce plural segments concurrently from plural tracks. The unit identifying data and segments reproduced by all of the reproducing heads and the plural sets are sensed to detect when the unit identifying data in those segments includes common unit identification, thus determining that all of the segments of a preceding block unit have been reproduced from the record medium.

From GB-A-2 149 192 a magnetic recording and reproducing apparatus is known using a pilot signal control system being adapted such that a cue signal is recorded in a cue track provided besides a video signal track when a magnetic tape is temporary stopped during the recording operation and is moved in the backwalled direction by a predetermined amount, and when the temporary stop is cancelled and the magnetic tape is moved in the forward direction, the cue signal is reproduced and the recording operation is restarted responsive to the reproduced cue signal.

### SUMMARY OF THE INVENTION

In view of the foregoing, an object of this invention is to provide a video tape recorder in which, in the case of segment-recording, consecutive taking in picture recording may be performed smoothly.

The first aspect of the invention has been achieved by the provision of video tape recorder according to claim 1 generating recording signal S_{REC} by performing a video signal SV to digital signal processing in predetermined units of signal processing to record in segments the video signal SV onto recording tracks TA, TB, ... formed consecutively helically on a magnetic tape T, wherein: the video signal SV is recorded with identification data ID which changes by each unit of signal processing when the video signal SV is to be recorded; switching to reproduction mode is effected at the time of starting recording after rewinding the magnetic tape T by a predetermined distance; a break between units of signal processing is detected on the basis of the identification data ID reproduced from the reproducing tracks TA, TB, ...; and switching from the reproduction mode to recording mode is made at the break between the units of signal processing.

If switching from the reproduction mode to the recording mode is effected on the basis of identification data ID which changes by each unit of signal processing, picture recording may be securely started at a break between units of signal processing, thereby consecutive taking in picture recording may be performed smoothly.

At this time, if a second identification data ID for identifying the video signal SV of the normal television standards and the video signal SV of the high definition television standards is also used as the basis for judgment, continuation in picture recording may be smoothed between the video signal SV of the normal television standards and the video signal SV of the high definition television standards. Further, if a third identification data ID for identifying recording mode is used as the basis for judgment, consecutive taking in picture recording may be performed smoothly even if the recording modes thereof are different.

A video signal is segment-recorded with identification data for identifying each unit of signal processing being added thereto. At the time of starting recording, the magnetic tape is rewound and switching to reproduction mode is made. Then on the basis of such identification data switching is made from the reproduction mode to recording mode at a break between signal processing units. Thus the operation mode may be switched securely at a break between signal processing units and thereby a video tape recorder may be obtained in which consecutive taking in picture recording may be smoothly performed.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Fig. 1 is a block diagram showing a video tape recorder according to an embodiment of the present invention;
Figs. 2A to 2C are schematic diagrams showing sync blocks of the same;
Figs. 3A and 3B are schematic diagrams explanatory of operation when video signal of the normal television standards is to be recorded in the standard recording mode;
Figs. 4A and 4B are schematic diagrams explanatory of operation when video signal of the normal television standards is to be recorded in the long time recording mode;
Figs. 5A and 5B are schematic diagrams explanatory of operation when video signal of the high definition television standards is to be recorded in the standard recording mode;

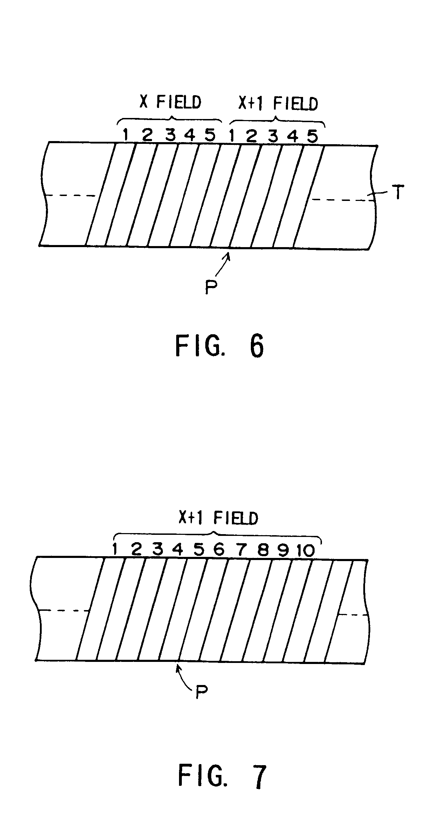

Fig. 6 is a schematic diagram explanatory of consecutive taking in picture recording in the case where video signal of the normal television standards is recorded in the standard recording mode;
Fig. 7 is a schematic diagram explanatory of consecutive taking in picture recording in the case where video signal of the high definition television standards is recorded in the standard recording mode;
Fig. 8 is a flowchart explanatory of the operation of consecutive taking in picture recording;
Figs. 9A to 9G are schematic diagrams explanatory of operation in the case where consecutive taking in picture recording is to be performed on the magnetic tape on which video signal of the normal television standards has been recorded in the standard recording mode; and
Figs. 10A to 10E are schematic diagrams explanatory of operation in the case where consecutive taking in picture recording is to be performed on the magnetic tape on which video signal of the high definition television standards has been recorded in the standard recording mode.

### DETAILED DESCRIPTION OF THE INVENTION

Preferred embodiments of this invention will be described with reference to the accompanying drawings:

### (1) Recording system

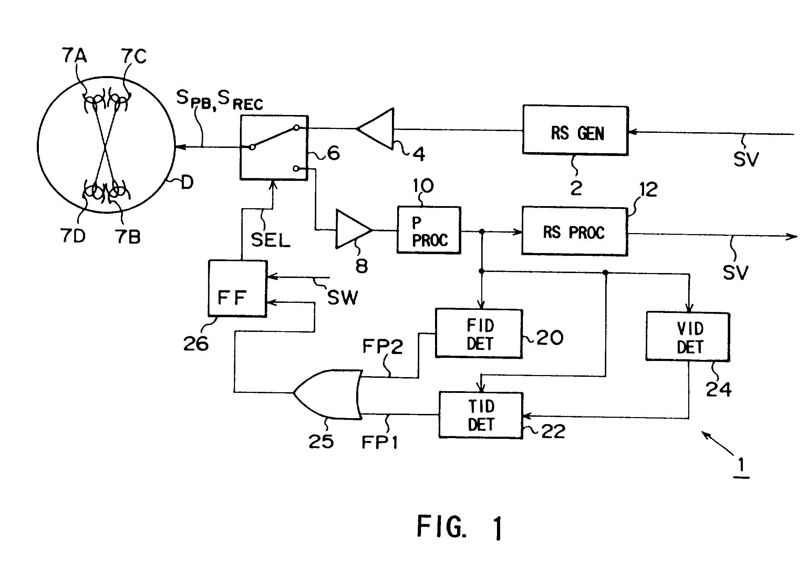

Referring to Fig. 1, 1 generally denotes a video tape recorder, which records and reproduces digital video signal using the technique of segment-recording.

For this reason, in the video tape recorder 1, a video signal SV is converted into a recording signal S_{REC} in a recording signal generating circuit 2 and then, the recording signal S_{REC} is output to magnetic heads 7A to 7D through an amplifier circuit 4 and a selector 6.

At this time, the recording signal generating circuit 2 switches unit of signal processing (hereinafter referred to as signal processing unit) in accordance with the type of the video signal SV and the recording mode, thereby it is possible to effectively record digital video signal as required.

Specifically, if the video signal of the normal television standards is to be recorded in the standard recording mode, the recording signal generating circuit 2 sets the signal processing unit to unit consisting of a field of the video signal SV.

Thereby, after converting the video signal SV of the normal television standards into a digital signal, the recording signal generating circuit 2 performs data compression and shuffling in units of field.

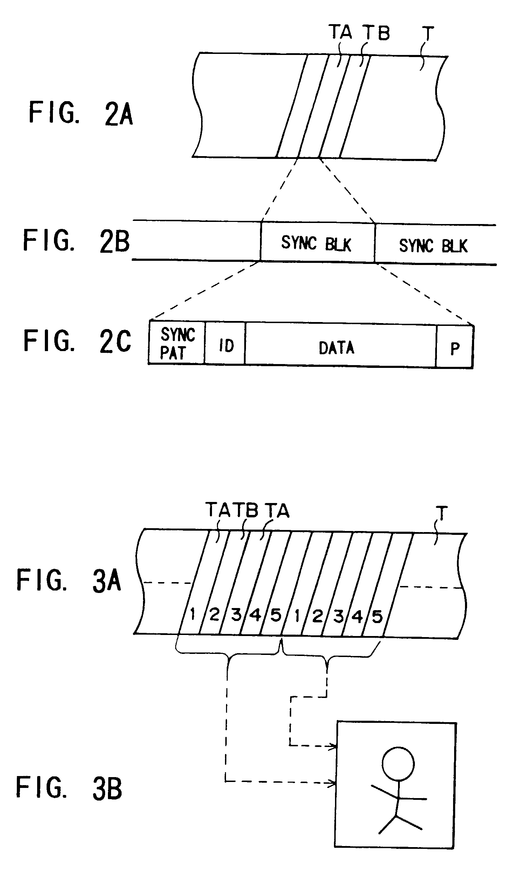

Further, the recording signal generating circuit 2 divides the shuffled digital signal corresponding to one field into five tracks and as shown in Figs. 2A to 2C outputs the predetermined and plural number of sync blocks by allocating them to the recording tracks TA, TB, ... (Figs. 2A and 2B), respectively. At this time each sync block is output with an error-correcting code P (Fig. 2C).

Further, the recording signal generating circuit 2 adds a sync pattern at the head of each sync block and then outputs it with a predetermined identification data ID being added thereto.

Here, in the video tape recorder 1, two pairs of magnetic heads 7A to 7D of positive and negative azimuth angles are disposed on a rotary drum D with respective angular intervals of 180°. When the video signal of the normal television standards is to be recorded in the standard recording mode, one pair of recording heads 7A, 7B of these disposed with an angular interval of 180° are selectively used to form the recording tracks.

In other words, in the video tape recorder 1, the recording signal S_{REC} is output to the magnetic heads 7A, 7B at timings at which the pair of magnetic heads 7A, 7B scan the magnetic tape T, respectively.

Thereby, in the video tape recorder 1, in the case where the video signal of the normal television standards is to be recorded in the standard recording mode, the video signal corresponding to one field is allocated to five tracks as shown in Figs. 3A and 3B (in this case the video signal corresponding to one frame being allocated to ten tracks).

On the other hand, if the video signal of the normal television standards is to be recorded in long time recording mode, the recording signal generating circuit 2 switches the signal processing unit to a unit consisting of a frame.

In other words, in data compression processing, data may be more efficiently compressed as a whole in the case of processing in units each consisting of a frame than in the case of processing in units each consisting of a field.

For this reason, in the recording signal generating circuit 2, data compression processing is performed in units each consisting of a frame, shuffling is performed and then sync blocks are formed.

At this time, the recording signal generating circuit 2 divides the digital signal corresponding to one frame into predetermined and plural number of sync blocks and adds sync pattern, identification data ID, parity code P thereto. On the other hand, the video tape recorder 1 lowers the running speed of the magnetic tape to 1/2 of that in the case where video signal of the normal television standards is recorded in the standard recording mode.

Further, in the video tape recorder 1, the pair of magnetic heads 7A, 7B disposed with an angular interval of 180° of the two pairs of magnetic heads 7A to 7D are selectively used to form recording tracks.

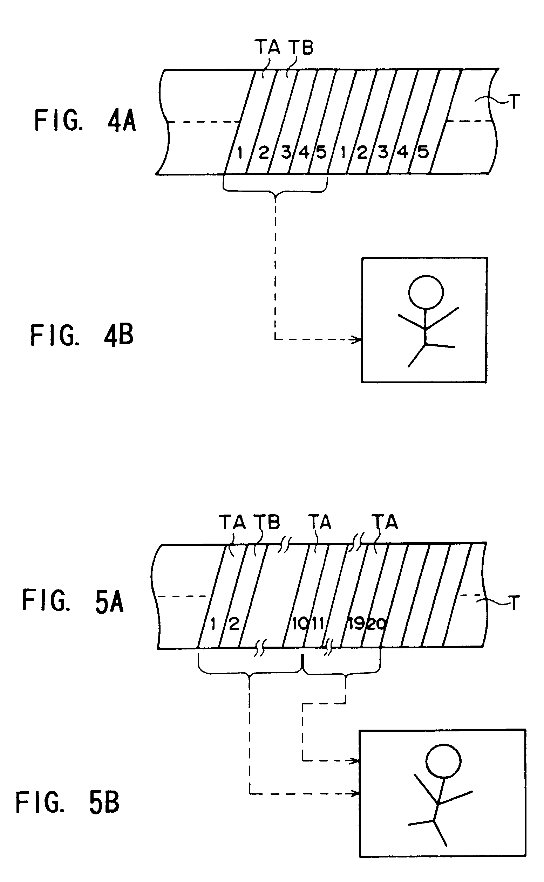

Thereby, in the video tape recorder 1, in the case where the long time recording mode is used to record the video signal of the normal television standards, the video signal corresponding to one frame is allocated to five tracks as shown in Figs. 4A and 4B.

On the other hand, when the video signal of the high definition television standards is to be recorded in the standard recording mode, the signal processing unit of the video signal SV is switched to units each consisting of a field in the recording signal generating circuit 2 and data compression and shuffling are performed by each field unit.

Further, the recording signal generating circuit 2 divides the data in each field unit into ten sync blocks and adds sync pattern, identification data ID and parity code P thereto.

Further, in the case where the video signal of the high definition television standards is to be recorded in the standard recording mode, the video tape recorder 1 increases the running speed of the magnetic tape to two times that in the case where the video signal of the normal television standards is to be recorded in the standard mode and supplies recording signal S_{REC} to the two pairs of the magnetic heads 7A to 7D to form recording tracks.

Thereby, in the video tape recorder 1, in the case where the video signal of the high definition television standards is to be recorded in the standard recording mode, the digital video signal corresponding to one frame is segment-recorded on twenty tracks as shown in Figs. 5A and 5B.

On the other hand, when the video signal of the high definition television standards is to be recorded in the long time recording mode, the signal processing unit is set to units each consisting of a frame to generate recording signal S_{REC} in the recording signal generating circuit 2. In the video tape recorder 1, on the other hand, the magnetic tape running system or the like is controlled in a similar manner as in the case where the video signal of the normal television standards is to be recorded in the standard recording mode, to thereby segment-record the digital video signal corresponding to one frame.

Further, when digital video signal is segment-recorded in this manner, frame ID, track ID, video ID are recorded in a switching manner as the identification data ID at the recording signal generating circuit 2, thereby the identification data ID is detected so that the operation mode of the reproducing signal processing circuit 12 may be switched as required and that continuation in picture recording may be smoothly performed.

Here, while the frame ID varies in value successively and cyclically in a predetermined value range so that the value is updated by each signal processing unit, the track ID is updated by each track successively in the signal processing unit and video ID is updated so that type of digital video signal and recording mode may be identified.

### (2) Reproducing system

On the other hand, in the reproducing system, the video tape recorder 1 switches the contact of the selector 6 to amplify through the amplifier circuit 8 reproducing signal S_{PB} output from the magnetic heads 7A to 7D and then corrects the frequency characteristic thereof through a preprocessing circuit 10.

The reproducing signal processing circuit 12 receives the reproducing signal S_{PB} processed in the preprocessing circuit 10 to detect a video ID and to process the reproducing signal in accordance with the video ID, and thereby demodulates and outputs the digital video signal SV.

Thereby, in the video tape recorder 1, various video signals may be recorded and reproduced in the form of a digital signal.

### (3) Consecutive taking in picture recording

When consecutive taking in picture recording is to be performed on a magnetic tape T on which segment-recording has been made in the above manner, if the operation mode is switched from the reproducing mode to the recording mode simply in synchronization with the rotation of the rotary drum, there may be a case where switching to the recording mode is effected at a midway point P of X+1 field which is formed of a single recording unit. In this case, data of the remaining three tracks of X+1 field is overwritten.

For this reason, at X+1 field, it becomes impossible to correctly reproduce the digital video signal and, accordingly, continuation in picture taking cannot be performed smoothly.

On the other hand, in the case as shown in Fig. 7 where the video signal of the high definition television standards has been recorded in the standard recording mode, switching to recording mode may be effected similarly at some midway point P of X+1 field. In this case, also, the remaining data of the X+1 field is overwritten and smooth continuation in picture recording becomes impossible.

For this reason, in this embodiment, the operation mode is switched on the basis of the video ID, the frame ID and the track ID to make possible smooth continuation in picture recording.

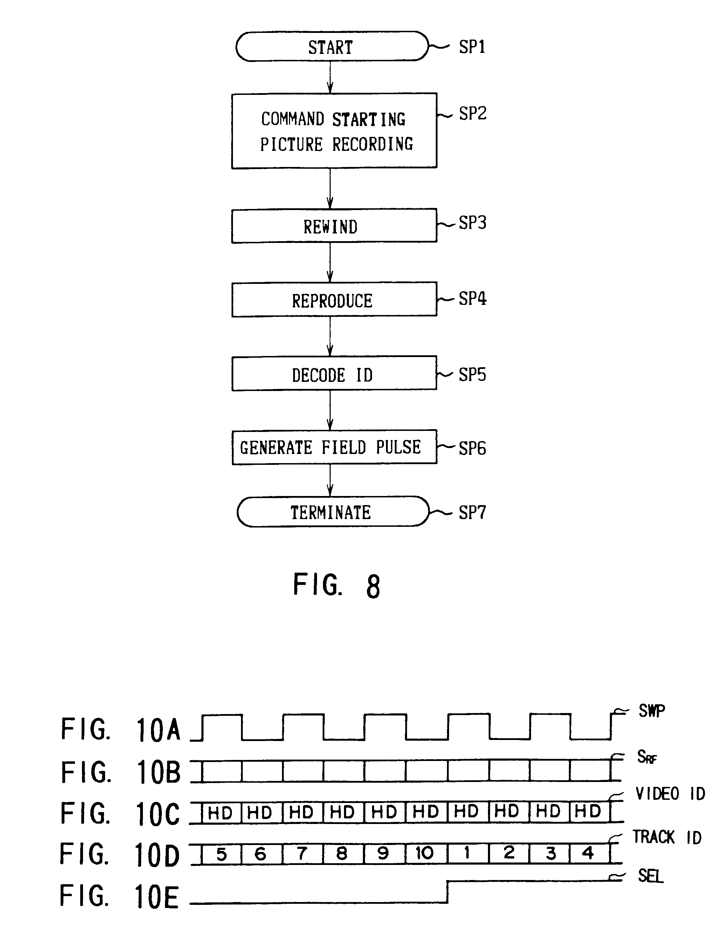

That is, in the video tape recorder 1, the procedure as shown in Fig. 8 is executed in consecutive taking in picture recording to smoothly perform to the consecutive taking in picture recording.

Here, in the video tape recorder 1, when processing proceeds from step SP1 to step SP2 where the user turns on the operation key, command for starting picture recording is read to a system control circuit (not shown) and then processing proceeds to step SP3.

Further, the system control circuit switches the operation as a whole to the operation mode of rewinding to rewind the magnetic tape by an amount of corresponding to several tracks and then proceeds to step SP4 to switch the overall operation mode to the reproducing mode.

Thereby, when consecutive taking in picture recording is to be made in the video tape recorder 1, the magnetic tape is rewound to start phase servo of the magnetic tape running system and then switching to picture recording mode is performed.

Then, in the video tape recorder 1, processing proceeds to step SP5 at which the reproducing signal S_{PB} output from the preprocessing circuit 10 is delivered to a frame ID detecting circuit 20, a track ID detecting circuit 22 and a video ID detecting circuit 24, where the frame ID, the track ID and the video ID are respectively detected.

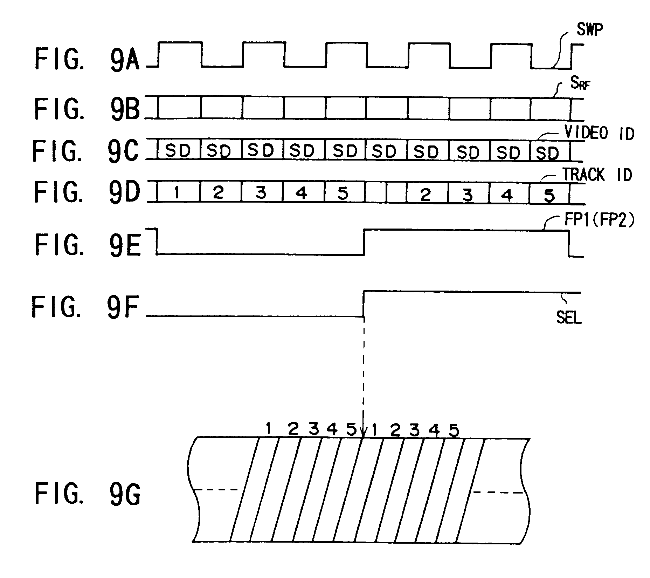

Here, as shown in Figs. 9A to 9G, in the video tape recorder 1, in the case where video signal of the normal television standards is to be recorded in continuation to the magnetic tape which video signal of the normal television standards has been recorded in the standard recording mode, a reproducing signal S_{RF} (Fig. 9B) is obtained from the magnetic heads 7A, 7B in synchronization with switching pulse signal SWP (Fig. 9A) of which the signal level is changed over in synchronization with the rotation of the rotary drum D. Video ID and track ID are respectively detected from each recording track (Figs. 9C and 9D).

Here, a symbol SD represents the fact that the video signal of the normal television standards is recorded in the standard recording mode and the consecutive numerals each represents a track ID.

Upon detecting the video ID, the video ID detecting circuit 24 outputs the detected result to the track ID detecting circuit 22, and the track ID detecting circuit 22 sequentially detects the track ID on the basis of such detected result. Thereby, when the video signal of the normal television standards recorded in the standard recording mode is to be reproduced, a frame pulse FP1 (Fig. 9E) is generated, of which the signal level is changed over in synchronization with the signal processing unit of the video signal at a cycle of five tracks.

On the other hand, the frame ID detecting circuit 20 detects frame ID to generate a frame pulse FP2 of which the signal level is changed over by each signal processing unit (in ordinary circumstances the signal is as same as signal of FP1 completely).

An OR circuit 25 receives the first and second frame pulses FP1 and FP2 output from the frame ID detecting circuit 20 and the track ID detecting circuit 22 and, based on these, outputs a switching signal of which the signal level builds-up at a break between signal processing units. This OR circuit is used for purpose that obtains frame pulse even if either FP1 or FP2 cannot be detected.

After the building-up of the recording mode switching signal SW, a flip-flop circuit 26, upon the building-up of the signal level of the switching signal, outputs a switching signal SEL (Fig. 9F) of which the signal level builds-up in synchronization with the building-up of the above switching signal thereby switches the contact of the selecting circuit 6 from the reproducing side to the recording side.

Thereby, in the video tape recorder 1, the frame pulse is generated at step SP6 on the basis of the frame ID, the track ID and the video ID which have been detected at step SP5, so as to switch the operation mode as a whole from the reproducing mode to the recording mode at a break between signal processing units.

Thereby, the video tape recorder 1 records the sequentially input video signals SV by converting them into digital signals and then proceeds to step SP7 to terminate this procedure.

In this manner, when segment-recording is to be made, the operation mode as a whole is switched to the reproducing mode to detect frame ID, track ID and video ID and, on the basis of the result of such detection, switching to the recording mode is made at a break between signal processing units. Thus recording tracks may be securely formed for each signal processing unit. Thereby, the video signal of the normal television standards recorded in the standard recording mode may be continued smoothly in consecutive picture recording (Fig. 9G).

At the time of such switching of mode, in the video tape recorder 1, the running speed of the magnetic tape is changed in accordance with the recording mode on the basis of the control signal output from the system control circuit. Thereby, a desired video signal is recorded in a desired format on the magnetic tape on which the video signal of the normal television standards has been recorded in the standard recording mode.

On the other hand, when consecutive taking in picture recording is to be made with respect to a magnetic tape on which a video signal of the normal television standards has been recorded in the long time recording mode, a frame pulse FP1 which is changed over by each signal processing unit is generated in a similar manner in the track ID detecting circuit 22 on the basis of the video ID detected in the video ID detecting circuit 24, and a frame pulse FP2 is detected in the frame ID detecting circuit 20. Thereby consecutive taking in picture recording may be smoothly performed in a similar manner.

On the other hand, in the case where consecutive taking in picture recording is to be made on the magnetic tape on which a video signal of the high definition television standards has been recorded, a video ID (Fig. 10C) representing the high definition television standards and the standard recording mode is detected as shown in Figs. 10A to 10E in synchronization with the switching pulse signal SWP and the reproducing signal S_{RF} (Figs. 10A and 10B). In this case, a track ID (Fig. 10D) of which the value is repeated at a cycle of ten tracks is detected.

Thereby, in the video tape recorder 1, the signal level of the switching signal SEL (Fig. 10E) is caused to build-up at a break between track IDs which corresponds to a break between signal processing units. Thereby consecutive taking in picture recording may be smoothly performed also for the magnetic tape on which the video signal of the high definition television standards has been recorded in the standard recording mode.

Furthermore, in the case where consecutive taking in picture recording is to be made on the magnetic tape on which a video signal of the high definition television standards has been recorded in the long time recording mode, in the video tape recorder 1, the operation mode may be changed over in a similar manner at a break between signal processing units in accordance with video ID, track ID and frame ID. Thereby, the consecutive taking in picture recording may be smoothly performed.

At the time of such switching of the operation mode, in the video tape recorder 1, a frame pulse FP2 generated from the frame ID and a frame pulse FP1 generated from the video ID and the track ID are delivered to the OR circuit 25 and, on the basis of the output signal of the OR circuit 25, the operation mode is switched. Thus it is possible to securely switch the operation mode even when no identification signal can be detected. Thereby, a break between signal processing units may be securely detected to smoothly perform consecutive taking in picture recording.

### (4) Advantage of the embodiment

According to the above construction, when video signals of the normal television standards and the high definition television standards are to be segment-recorded in different recording format, recording is made by adding an identification data to each recording track. At the time of reproduction, the magnetic tape is rewound to switch to reproducing mode and then a break between signal processing units is detected on the basis of the identification data. By switching to recording mode at such a break, it is possible to securely switch the operation mode at a break between signal processing units. Thereby consecutive taking in picture recording may be smoothly performed.

### (5) Other embodiments

Furthermore, while in the above described embodiment a description has been given with respect to a case where the unit for signal processing is changed between the long time recording mode and the standard recording mode, the present invention is not limited to this and may be widely applied to cases such as where the forming speed of the recording track is switched to change recording time.

## Claims

1. A video tape recorder generating each recording signal through digital signal processing of a video signal of normal television standards and a video signal of high definition television standards to segment-record said video signal of normal television standards and said video signal of high definition television standards on recording tracks (TA; TB) helically formed on a magnetic tape (T), said video tape recorder comprising:
(a) recording means (7A-7D, 2, 4) for recording a unit of said video signal together with identification data said identification data identifying the television standard, a frame and the track of said unit,
(b) reproducing means (7A-7D, 8, 10, 12) for reproducing said recorded digital video signal and said identification data from said magnetic tape (T), and
(c) control means (20-26, 6) for rewinding said magnetic tape (T) by a predetermined distance at the beginning of recording of said video signal of normal television standards and said video signal of high definition television standards, then for switching to reproducing mode, and for switching over again from said reproducing mode to recording mode at the end of a predetermined unit of said video signal,
wherein said control means comprise means (20, 22, 20, 25) for detecting said end of a predetermined unit on the basis of two signals (FP1, FP2), the first signal (FP1) being based (23, 24) on the track and standard identification data and the second signal (FP2) being based (20) on the frame identification data,
one of the first signal (FP1) and the second signal (FP2) being sufficient to detect said end of a predetermined unit.

2. The video tape recorder of claim 1, wherein said predetermined signal unit is a frame.

3. The video tape recorder of claims 1 or 2, wherein said identification data identifies a recording track (TA, TB) formed on said magnetic tape (T).

4. The video tape recorder of claims 1 or 2, wherein said identification data identifies a frame of said video signal.

5. The video tape recorder of claim 3, wherein said identification data further identifies a kind of video signal and the recording mode.

6. The video tape recorder of claim 1, wherein said predetermined signal unit of said first identification data is a frame.

7. The video tape recorder of claims 1 or 6, wherein said the first identification data identifies a recording track (TA, TB) formed on said magnetic tape (T).

8. The video tape recorder of claims 1 or 6, wherein said the first identification data identifies a frame of said video signal.

9. The video tape recorder of any of claims 1, 6, 7, or 8, wherein said the second identification data identifies that said video signal is whether the normal television standards or the high definition television standards.

10. The video tape recorder according to anyone of the preceding claims, wherein the video tape recorder can be switched between a standard recording mode and a long time recording mode.

11. The video tape recorder according to claim 10, further including means to move the magnetic tape at a first tape speed when the standard recording mode is selected and at a second tape speed equal to half of the first tape speed when the long time recording mode is selected.

## Patentansprüche

1. Videoband-Aufzeichnungsvorrichtung, die jedes Aufzeichnungssignal durch digitale Signalverarbeitung eines Videosignales normaler Fernsehstandards und eines Videosignales von Standards des hochauflösenden Fernsehens erzeugt, um das Videosignal der normalen Fernsehstandards und das Videosignal der Standards des hochauflösenden Fernsehens auf Aufzeichnungsspuren (TA, TB) segmentweise aufzuzeichnen, die schräg auf einem Magnetband (T) ausgebildet sind, wobei die Videoband-Aufzeichnungsvorrichtung umfaßt:
(a) eine Aufzeichnungseinrichtung (7A-7D, 2, 4) zum Aufzeichnen einer Einheit des Videosignales zusammen mit Identifizierungsdaten, wobei die Identifizierungsdaten den Fernsehstandard, ein Vollbild und die Spur der Einheit identifizieren,
(b) eine Wiedergabeeinrichtung (7A-7D, 8, 10, 12) zum Wiedergeben des aufgezeichneten digitalen Videosignales und der Identifizierungsdaten von dem Magnetband (T) und
(c) eine Steuereinrichtung (20-26, 6) zum Zurückspulen des Magnetbandes (T) um eine vorbestimmte Länge beim Start der Aufzeichnung des Videosignales der normalen Fernsehstandards und des Videosignales der Standards des hochauflösenden Fernsehens, weiterhin zum Umschalten zum Wiedergabemodus und zum Wiederrückschalten von dem Wiedergabemodus in den Aufzeichnungsmodus am Ende einer vorbestimmten Einheit des Videosignales,
wobei die Steuereinrichtung eine Einrichtung (20, 22, 20, 25) zum Detektieren des Endes einer vorbestimmten Einheit auf der Basis zweier Signale (FP1, FP2) umfaßt, wobei das erste Signal (FP1) auf den Spur- und Standardidentifizierungsdaten basiert (23, 24) und das zweite Signal (FP2) auf den Vollbildidentifizierungsdaten basiert (20), wobei das erste Signal (FP1) oder das zweite Signal (FP2) ausreichend sind, um das Ende einer vorbestimmten Einheit zu detektieren.

2. Videobandaufzeichnungsvorrichtung gemäß Anspruch 1, wobei die vorbestimmte Signaleinheit ein Vollbild ist.

3. Videobandaufzeichnungsvorrichtung gemäß Anspruch 1 oder 2, wobei die Identifizierungsdaten eine Aufzeichnungsspur (TA, TB) identifizieren, die auf dem Magnetband (T) ausgebildet ist.

4. Videobandaufzeichnungsvorrichtung gemäß Anspruch 1 oder 2, wobei die Identifizierungsdaten ein Vollbild des Videosignales identifizieren.

5. Videobandaufzeichnungsvorrichtung gemäß Anspruch 3, wobei die Identifizierungsdaten die Art des Videosignales und den Aufzeichnungsmodus identifizieren.

6. Videobandaufzeichnungsvorrichtung gemäß Anspruch 1, wobei die vorbestimmte Signaleinheit der ersten Identifizierungsdaten ein Vollbild ist.

7. Videobandaufzeichnungsvorrichtung gemäß Anspruch 1 oder 6, wobei die ersten Identifizierungsdaten eine auf dem Magnetband (T) ausgebildete Aufzeichnungsspur (TA, TB) identifizieren.

8. Videobandaufzeichnungsvorrichtung gemäß Anspruch 1 oder 6, wobei die ersten Identifizierungsdaten ein Vollbild des Videosignales identifizieren.

9. Videobandaufzeichnungsvorrichtung gemäß einem der Ansprüche 1, 6, 7 oder 8, wobei die zweiten Identifizierungsdaten identifizieren, ob das Videosignal entweder normalen Fernsehstandards oder den Fernsehstandards des hochauflösenden Fernsehens entspricht.

10. Videobandaufzeichnungsvorrichtung gemäß einem der vorhergehenden Ansprüche, wobei die Videobandaufzeichnungsvorrichtung zwischen einem Standardaufzeichnungsmodus und einem Langzeit-Aufzeichnungsmodus umgeschaltet werden kann.

11. Videobandaufzeichnungsvorrichtung gemäß Anspruch 10, weiterhin mit einer Einrichtung zum Bewegen des Magnetbandes mit einer ersten Bandgeschwindigkeit, wenn der Standardaufzeichnungsmodus ausgewählt ist, und mit einer zweiten Bandgeschwindigkeit, die gleich der Hälfte der ersten Bandgeschwindigkeit ist, wenn der Langzeit-Aufzeichnungsmodus ausgewählt ist.

## Revendications

1. Magnétoscope générant chaque signal d'enregistrement par le traitement en signal numérique d'un signal vidéo des standards de télévision normale et d'un signal vidéo des standards de télévision à haute définition afin d'enregistrer par segment ledit signal vidéo des standards de télévision normale et ledit signal vidéo des standards de télévision à haute définition sur des pistes d'enregistrement (TA, TB) formées de manière hélicoïdale sur une bande magnétique (T), ledit magnétoscope comprenant :
(a) des moyens d'enregistrement (7A-7D, 2, 4) destinés à enregistrer une unité dudit signal vidéo avec des données d'identification, lesdites données d'identification identifiant le standard de télévision, une trame et la piste de ladite unité,
(b) des moyens de reproduction (7A-7D, 8, 10, 12) destinés à reproduire ledit signal vidéo numérique enregistré et lesdites données d'identification à partir de ladite bande magnétique (T), et
(c) des moyens de contrôle (20-26, 6) pour rembobiner ladite bande magnétique (T) d'une distance prédéterminée au début de l'enregistrement dudit signal vidéo des standards de télévision normale et dudit signal vidéo des standards de télévision à haute définition pour, ensuite, commuter vers le mode de reproduction, et pour commuter de nouveau dudit mode de reproduction vers le mode d'enregistrement à la fin d'une unité prédéterminée dudit signal vidéo,
dans lequel lesdits moyens de contrôle comprennent des moyens (20, 22, 20, 25) destinés à détecter ladite fin d'une unité prédéterminée en se basant sur deux signaux (FP1, FP2), le premier signal (FP1) étant basé (23, 24) sur les données d'identification de piste et de standard et le second signal (FP2) étant basé (20) sur les données d'identification de trame,
l'un du premier signal (FP1) et du second signal (FP2) étant suffisant pour détecter ladite fin d'une unité prédéterminée.

2. Magnétoscope selon la revendication 1, dans lequel ladite unité de signal prédéterminée est une trame.

3. Magnétoscope selon les revendications 1 ou 2, dans lequel lesdites données d'identification identifient une piste d'enregistrement (TA, TB) formée sur ladite bande magnétique (T).

4. Magnétoscope selon les revendications 1 ou 2, dans lequel lesdites données d'identification identifient une trame dudit signal vidéo.

5. Magnétoscope selon la revendication 3, dans lequel lesdites données d'identification identifient, de plus, un type de signal vidéo et le mode d'enregistrement.

6. Magnétoscope selon la revendication 1, dans lequel ladite unité de signal prédéterminée desdites premières données d'identification est une trame.

7. Magnétoscope selon les revendications 1 ou 6, dans lequel lesdites premières données d'identification identifient une piste d'enregistrement (TA, TB) formée sur ladite bande magnétique (T).

8. Magnétoscope selon les revendications 1 ou 6, dans lequel lesdites premières données d'identification identifient une trame dudit signal vidéo.

9. Magnétoscope selon l'une quelconque des revendications 1, 6, 7 ou 8, dans lequel lesdites secondes données d'identification identifient le fait que ledit signal vidéo est soit les standards de télévision normale, soit les standards de télévision à haute définition.

10. Magnétoscope selon l'une quelconque des revendications précédentes, dans lequel le magnétoscope peut être commuté entre un mode d'enregistrement standard et un mode d'enregistrement de longue durée.

11. Magnétoscope selon la revendication 10, comprenant, de plus, des moyens destinés à déplacer la bande magnétique à une première vitesse de bande lorsque le mode d'enregistrement standard est sélectionné et à une seconde vitesse de bande égale à la moitié de la première vitesse de bande lorsque le mode d'enregistrement de longue durée est sélectionné.
